Europäisches Patentamt

European Patent Office

Office européen des brevets

(11) Veröffentlichungsnummer: **0 421 914 A1**

# EUROPÄISCHE PATENTANMELDUNG

(21) Anmeldenummer: 90710026.7

(22) Anmeldetag: 05.10.90

(51) Int. Cl.5: **H05B 39/04**, H02M 5/458

(30) Priorität: 06.10.89 DE 3933508

(43) Veröffentlichungstag der Anmeldung:
10.04.91 Patentblatt 91/15

(84) Benannte Vertragsstaaten:
AT BE CH DE DK ES FR GB GR IT LI LU NL SE

(71) Anmelder: **BEME-ELECTRONIC GMBH**
**Bessemer Weg 7**
**W-5750 Menden 1(DE)**

Anmelder: **BK-ELECTRONIC GMBH**
**Neustadtstrasse 27**
**W-5980 Werdohl(DE)**

(72) Erfinder: **Tusch, Franz**
**Im Käsebrink 40**
**W-5970 Plettenberg(DE)**
Erfinder: **Klüppel, Clemens**
**Borketalstrasse 35**
**W-5982 Neuenrade 5(DE)**

(74) Vertreter: **Hassler, Werner, Dr.**
**Postfach 17 04 Asenberg 62**
**W-5880 Lüdenscheid(DE)**

(54) **Dimmergerät für Niedervolthalogenlampen.**

(57) Ein Dimmergerät für aus einer Netzspannung über eine Gleichrichterschaltung und einem HF-Oszillator gespeiste Niedervolthalogenlampen, mit einen Taster zur Erzeugung von Impulsfolgen mit Netzfrequenz, mit einem Oszillator, dessen Frequenz etwa ein Vielfaches der doppelten Netzfrequenz beträgt, mit einem Zähler zur Zählung der Oszillatorimpulse während jeder Halbwelle, mit einem Vergleicher zum Vergleich des aktuellen Zählstandes mit dem Zählstand eines voreinstellbaren Zählers und mit einer von einem Ausgangsvergleichsimpuls des Vergleichers geschalteten Betätigungsstufe für eine spannungführende Leitung der Gleichrichterschaltung. Das technische Problem ist eine gleichmäßige Steuerung und Verstellung des voreinstellbaren Zählers und damit der Helligkeit durch die Taster-Impulsfolgen. Der voreinstellbare Zähler ist als up/down-Zähler (13) ausgebildet, dessen Kapazizät dem genannten Vielfachen der doppelten Netzfrequenz gleich ist. Der Ausgang des Tasters (7) ist an den Eingang eines Teilers (10), dessen Überlaufausgang zu einem Sperreingang zurückgeführt ist, angeschaltet. Der Ausgang des Teilers (10) ist an den Zählrichtungseingang (up) des up/down-Zählers (13) angeschlossen, und die Tastimpulse liegen über einen weiteren Teiler (11) und eine Und-Schaltung (12), die außerdem an den Ausgang des Teilers (10) mit Sperreingang angeschaltet ist, an dem Zähleingang (c) des up/down-Zählers (13) an.

## DIMMERGERÄT FÜR NIEDERVOLTHALOGENLAMPEN

Die Erfindung betrifft ein Dimmergerät für aus einer Netzspannung über eine Gleichrichterschaltung und einem HF-Oszillator gespeiste Niedervolthalogenlampen, mit einen Taster zur Erzeugung von Impulsfolgen mit Netzfrequenz, mit einem Oszillator, dessen Frequenz etwa ein Vielfaches der doppelten Netzfrequenz beträgt, mit einem Zähler zur Zählung der Oszillatorimpulse während jeder Halbwelle, mit einem Vergleicher zum Vergleich des aktuellen Zählstandes mit dem Zählstand eines voreinstellbaren Zählers und mit einer von einem Ausgangsvergleichsimpuls des Vergleichers geschalteten Betätigungsstufe für eine spannungführende Leitung der Gleichrichterschaltung.

Dimmergeräte sind in zahlreichen Ausführungsformen bekannt. Dieselben arbeiten mit Analogschaltstufen und bewirken jeweils entsprechend der Einstellung des Dimmers eine Phasensteuerung des gleichgerichteten Stromes während der jeweiligen Netzhalbwellen. Der gleichgerichtete Strom dient im allgemeinen zur Speisung eines Hochfrequenzteils für die Niedervolthalogenlampe. Man kennt auch eine Phasenabschnittssteuerung, die für ihr günstiges Schwingungsverhalten mit wenig Störungen bekannt ist.

Ein Dimmergerät der eingangs genannten Art ist aus der DE-A-3 514 433 bekannt. Der dort beschriebene Vorwählzähler erfordert eine gesonderte Einstellung.

Aufgabe der Erfindung ist eine gleichmäßige Steuerung und Verstellung des voreinstellbaren Zählers und damit der Helligkeit durch die Taster-Impulsfolgen.

Diese Aufgabe wird nach der Erfindung dadurch gelöst, daß der voreinstellbare Zähler als up/down-Zähler ausgebildet ist, dessen Kapazizät dem genannten Vielfachen der doppelten Netzfrequenz gleich ist, daß der Ausgang des Tasters an den Eingang eines Teilers, dessen Überlaufausgang zu einem Sperreingang zurückgeführt ist, angeschaltet ist, daß der Ausgang des Teilers an den Zählrichtungseingang up des up/down-Zählers angeschlossen ist und daß die Tastimpulse über einen weiteren Teiler und eine Und-Schaltung, die außerdem an den Ausgang des Teilers mit Sperreingang angeschaltet ist, an dem Zähleingang (c) des up/down-Zählers anliegen.

Die Erfindung unterscheidet sich insofern vom Stand der Technik, als mit einem einzigen Taster eine digitale Ein/Ausschaltung und Dimmung möglich ist. Es ist eine genaue Einstellung der jeweiligen Helligkeitsstufen möglich. Die Werte stehen nach dem jeweiligen Wiedereinschalten zur Verfügung. Der langdauernde Tastimpuls zur Dimmung wird gesondert erkannt. Auch die Richtung der Helligkeitsänderung wird in dem up/down-Zähler festgelegt.

Eine jeweilige Umschaltung der Zählrichtung wird dadurch erzielt, daß der Überlaufausgang des up/down-Zählers zusammen mit dem Ausgang des Teilers über eine Und-Schaltung an dem Zählrichtungseingang geführt ist.

Die Erkennung des Einschaltimpulses oder des Ausschaltimpulses ist dadurch sichergestellt, daß der Taster über eine Impulsverlängerungsstufe an eine Kippstufe angekoppelt ist, deren Ausgang zusammen mit dem Ausgang des Vergleichers über eine Und-Schaltung an die Betätigungsstufe angekoppelt ist. Die Schaltung der Kippstufe erfolgt jeweils durch die Rückflanke des verlängerten Impulses.

Eine langsame Änderung der Helligkeitsstufen während des Dimmvorgangs ist dadurch gewährleistet, daß der Ausgang des teilers an einer weiteren Kippstufe anliegt und daß die Ausgänge beider Kippstufen über eine Oder-Schaltung zu der Und-Schaltung für die Betätigungsstufe geführt sind.

Eine sichere Schaltfunktion wird dadurch gewährleistet, daß die Oszillatorfrequenz höher als das genannte Vielfache der doppelten Netzfrequenz ist.

Eine freizügige Schaltauslegung wird dadurch gesichert, daß die jeweilige Einschaltdauer des Oszillators so gewählt ist, daß während jeder Einschaltdauer eine Impulszahl gleich den genannten Vielfachen abgegeben wird.

Eine Ausführungsform der Erfindung wird im folgenden unter Bezugnahme auf das Blockschaltbild erläutert.

Die an den Anschlüssen 1 anstehende Netzspannung, normalerweise eine 50 Hz-Spannung, wird in einem Transformator 2 herabgesetzt und in einem Gleichrichter 3 gleichgerichtet. Der Gleichrichter 3 stellt auf den Leitungen 4 und 5 eine Gleichspannung bereit. Die Leitungen 4 und 5 führen zu einem nicht dargestellten Hochfrequenzgenerator zur Speisung von Niedervolthalogenlampen. In die Leitung 5 ist ein Schalter 6 eingefügt, der normalerweise ein elektronisches Schaltglied ist.

Die Gleichrichterschaltung 3 ist nur schematisch dargestellt. Einrichtungen zur Spannungsstabilisierung und Glättung sind nicht gezeigt. Die Gleichrichterschaltung 3 dient auch zur Speisung der Schaltstufen für das Dimmergerät.

Das Dimmergerät umfaßt einen Taster 7, der über eine Leitung 8 an eine netzabhängige Spannung angeschlossen ist. Die Leitung 8 enthält einen hohen Widerstand. Bei der Betätigung des Tasters 7 werden Impulse mit Netzfrequenz erzeugt. Diese Impulse werden in einer Entstörschaltung 9 entstört, so daß am Ausgang der Entstörschaltung 9 störungsfreie Impulsfolgen mit Netzfrequenz anstehen. Störungen durch Kontaktprellen und dergleichen werden in der Entstörschaltung ausgeschaltet.

Die Netzfrequenz beträgt normalerweise 50 Hz, so daß 50 Hz-Impulse an einem Teiler 10 anstehen, dessen Überlaufausgang zu einem Sperreingang zurückgeführt ist. Der Teiler 10 gibt also jeweils nach Eingang der durch das Teilerverhältnis festgelegten Impulszahl einen Ausgangsimpuls ab, der so lange andauert, wie der Taster 7 gedrückt ist und Eingangsimpulse erzeugt werden.

Das Teilerverhältnis des Teilers 10 beträgt bei dem beschriebenen Ausführungsbeispiel 50, so daß der Teiler 10 jeweils nach Ablauf von 1 s einen Ausgangsimpuls abgibt. Der Teiler 10 gibt also dann genau einen Ausgangsimpuls ab, wenn die Taste 7 länger als 1 s niedergedrückt gehalten wird.

Die 50 Hz-Impulse werden auch in einem weiteren Teiler 11 geteilt. Dieser Teiler 11 hat zum Beispiel ein Teilerverhältnis von 16 und dient zur Vergrößerung der Impulsperiode, um den Dimmvorgang zu verlangsamen. Die Ausgänge des Teilers 11 sowie des Teilers 10 mit Sperreingang sind über eine Und-Schaltung 12 zusammengeführt. Der Ausgang der Und-Schaltung 12 liegt an dem Zähleingang c eines up/down-Zählers 13 an.

Der up/down-Zähler hat einen Eingang up zur Einstellung der Zählrichtung sowie Eingänge 14 für die Voreinstellung. Die Kapazität des up/down-Zählers hat den Wert 16. Der up/down-Zähler hat Ausgänge 15, an denen der jeweilige Zählstand ansteht, sowie einen Überlaufausgang 16, der zusammen mit dem Ausgang des Teilers 10 über eine Und-Schaltung 17 zu dem Zählrichtungseingang up geführt ist.

Ein Oszillator 18 arbeitet mit einer Frequenz, die ein Vielfaches der doppelten Netzfrequenz beträgt oder etwas größer ist. Eine Nulldurchgangerkennungsschaltung 19 ist an den Gleichrichter 3 oder einen anderen Teil der Netzstufe angeschlossen. Diese Nulldurchgangerkennungsschaltung 19 erkennt jeden Nulldurchgang einer Halbwelle der Netzspannung. Die Nulldurchgangerkennungsschaltung schaltet nach jedem Durchgang den Oszillator 18 für eine solche Zeitdauer ein, daß während dieser Zeitdauer eine Impulszahl gleich dem genannten Vielfachen erzeugt wird. Die Größe dieses Vielfachen ist der Kapazität des up/down-Zählers gleich. Das Vielfache beträgt also bei dem beschriebenen Ausführungsbeispiel 16. Der Oszillator arbeitet also mit einer Frequenz von mindestens 1,6 kHz. Die Oszillatorfrequenz kann jedoch auch 2 kHz oder mehr betragen. Die während jeder Halbwelle erzeugten Oszillatorimpulse werden durch die Nulldurchgangerkennungsschaltung 19 gesteuert.

Dem up/down-Zähler ist ein voreinstellbarer Zähler 20 nachgeschaltet, an dessen Zähleingang die Impulse des Oszillators 18 anliegen. Der voreinstellbare Zähler zählt diese Impulse. Wenn die gezählte Impulszahl mit dem Voreinstellwert auf den Ausgängen 15 übereinstimmt, gibt der Zähler 20 eine Ausgangsspannung auf der Leitung 21 an die Und-Schaltung 22 ab.

Die 50 Hz-Impulse des Tasters 7 liegen ferner an einer Impulsverlängerungsschaltung 23 an, die durch den ersten 50 Hz-Impuls bei Betätigung des Tasters 7 angestoßen wird und einen Ausgangsimpuls abgibt, der während der gesamten Dauer der Betätigung des Tasters 7 andauert. Der Ausgang der Impulsverlängerungsschaltung liegt an einer selbsthaltenden Kippstufe 24 an, die also bei jeder Einschaltung des Tasters 7 umgeschaltet wird. Der Ausgang des Teilers 10 liegt ebenfalls an einer Kippstufe 25 an, die durch jeden Ausgangsimpuls des Teilers 10 angestoßen wird. Die Ausgänge der Kippstufen 24 und 25 werden über eine Oder-Schaltung 26 zusammengeführt. Der Ausgang dieser Oder-Schaltung liegt an der bereits genannten Und-Schaltung 22 an. Der Ausgang der Und-Schaltung 22 beauf schlagt eine Betätigungsstufe 23 für den Schalter 6. Der Schalter 6 wird also durch die Betätigungsstufe 23 jeweils eingeschaltet, um die Leistungszufuhr für den Hochfrequenzge nerator zu steuern.

Die Arbeitsweise der beschriebenen Schaltung ist folgende. Der Taster 7 dient sowohl zum Ein- und Ausschalten als auch zum Dimmen. Das Ein- und Ausschalten der Versorgung für die Niedervolthalogenlampen erfolgt über die Kippstufe 24. Bei jeder kurzzeitigen Betätigung des Tasters 7 wird die Kippstufe 24 umgeschaltet, so daß eine Einschaltung oder Ausschaltung der Beleuchtung erfolgt.

Zum Dimmen muß der Taster 7 längerdauernd gedrückt werden. Diese längerdauernden Dimmerimpulse werden durch den Teiler 10 erkannt. Der Teiler 10 mit einem Teilerverhältnis von 50 gibt jeweils nach 1 s einen Ausgangsimpuls ab, der einerseits den Zählrichtungseingang up des up/down-Zählers beaufschlagt und normalerweise umschaltet und andererseits über die Und-Schaltung 12 den Durchgang der geteilten 50 Hz-Impulse zum Zähleingang c des up/down-Zählers steuert. In dem up/down-Zähler werden die geteilten 50 Hz-Impulse gezählt und verstellen den Ausgangszählstand des up/down-Zählers auf dem Ausgang 15. Wenn der Endzählstand erreicht ist, erscheint ein Impuls auf dem Überlaufausgang 16, der den Zählrichtungseingang up umschaltet, so daß dann der up/down-Zähler in entgegengesetzter Richtung zählt.

Der auf den Ausgängen 15 anstehende Zählstand dient zur Einstellung des voreinstellbaren Zählers 20. Dieser Zählstand legt jeweils die Zeitstufen innerhalb einer Netzhalbwelle fest, während der die Spannungsversorgung für den Versorgungsstromkreis der Niedervolthalogenlampen eingeschaltet ist. Die Impulse des Oszillators 18 werden in dem voreinstellbaren Zähler 20 gezählt und jeweils mit dem Zählstand der Ausgänge 15 verglichen. Bei Übereinstimmung beider Zählstände wird auf der Leitung 21 ein Ausgangsimpuls abgegeben, der über die Und-Schaltung 22 die Betätigungsstufe 23 anstößt. An der Und-Schaltung 22 steht einerseits eine Spannung für die Einschaltung und andererseits eine Spannung für die anteilige Einschaltung während jeder Halbwelle an. Dadurch wird insgesamt die Einschaltphase während jeder Halbwelle festgelegt.

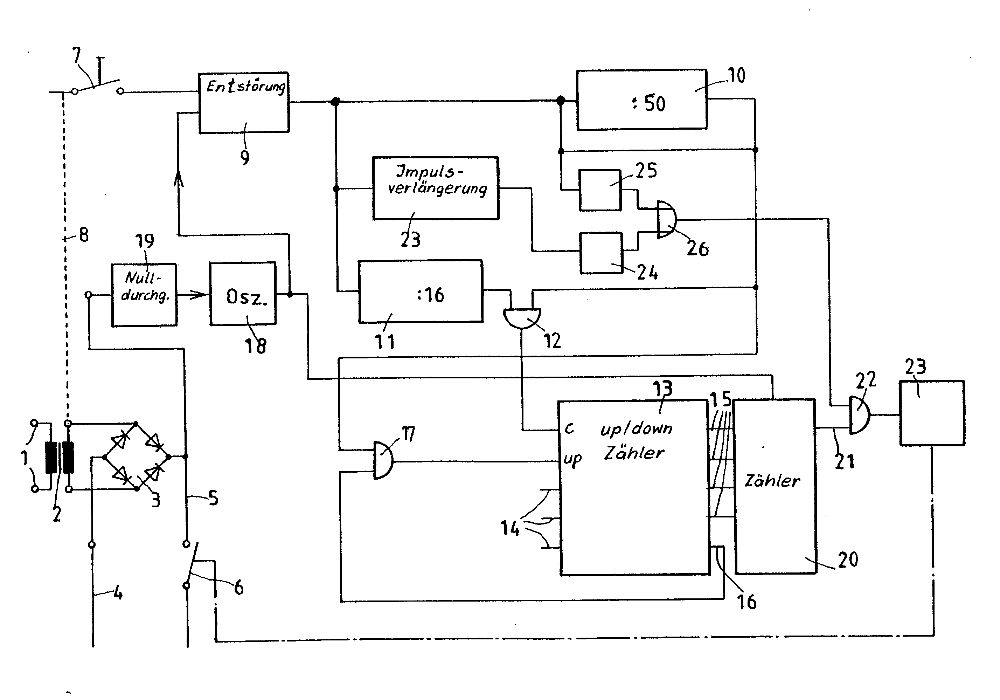

**Ansprüche**

1. Dimmergerät für aus einer Netzspannung über eine Gleichrichterschaltung und einem HF-Oszillator gespeiste Niedervolthalogenlampen, mit einen Taster zur Erzeugung von Impulsfolgen mit Netzfrequenz, mit einem Oszillator, dessen Frequenz etwa ein Vielfaches der doppelten Netzfrequenz beträgt, mit einem Zähler zur Zählung der Oszillatorimpulse während jeder Halbwelle, mit einem Vergleicher zum Vergleich des aktuellen Zählstandes mit dem Zählstand eines voreinstellbaren Zählers und mit einer von einem Ausgangsvergleichsimpuls des Vergleichers geschalteten Betätigungsstufe für eine spannungführende Leitung der Gleichrichterschaltung, dadurch gekennzeichnet, daß der voreinstellbare Zähler als up/down-Zähler (13) ausgebildet ist, dessen Kapazizät dem genannten Vielfachen der doppelten Netzfrequenz gleich ist, daß der Ausgang des Tasters (7) an den Eingang eines Teilers (10), dessen Überlaufausgang zu einem Sperreingang zurückgeführt ist, angeschaltet ist, daß der Ausgang des Teilers (10) an den Zählrichtungseingang (up) des up/down-Zählers (13) angeschlossen ist und daß die Tastimpulse über einen weiteren Teiler (11) und eine Und-Schaltung (12), die außerdem an den Ausgang des Teilers (10) mit Sperreingang angeschaltet ist, an dem Zähleingang (c) des up/down-Zählers (13) anliegen.

2. Dimmergerät nach Anspruch 1, dadurch gekennzeichnet, daß der Überlaufausgang (16) des up/down-Zählers (13) zusammen mit dem Ausgang des Teilers (10) über eine Und-Schaltung (17) an dem Zählrichtungseingang (up) geführt ist.

3. Dimmergerät nach Anspruch 1 oder 2, dadurch gekennzeichnet, daß der Taster (7) über eine Impulsverlängerungsstufe (23) an eine Kippstufe (24) angekoppelt ist, deren Ausgang zusammen mit dem Ausgang (21) des Vergleichers über eine Und-Schaltung (21) an die Betätigungsstufe (23) angekoppelt ist.

4. Dimmergerät nach Anspruch 3, dadurch gekennzeichnet, daß der Ausgang des Teilers (10) an einer weiteren Kippstufe (25) anliegt und daß die Ausgänge beider Kippstufen (24, 25) über eine Oder-Schaltung (26) zu der Und-Schaltung (22) für die Betätigungsstufe (23) geführt sind.

5. Dimmergerät nach einem der Ansprüche 1 bis 4, dadurch gekennzeichnet, daß die Oszillatorfrequenz etwas höher als das genannte Vielfache der doppelten Netzfrequenz ist.

6. Dimmergerät nach Anspruch 5, dadurch gekennzeichnet, daß die jeweilige Einschaltdauer des Oszillators (18) so gewählt ist, daß während jeder Einschaltdauer eine Impulszahl gleich den genannten Vielfachen abgegeben wird.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 331 157 (BEME)<br>* Spalte 1, Zeile 1 - Spalte 2, Zeile 53; Figur 3 *<br>– – – | 1 | H 05 B<br>39/04<br>H 02 M 5/458 |
| A | US-A-4 396 869 (ROSENBAUM)<br>* Spalte 7, Zeile 62 - Spalte 9, Zeile 40; Figur 1 *<br>– – – – – | 1 | |
| | | | **RECHERCHIERTE SACHGEBIETE (Int. Cl.5)**<br><br>H 05 B<br>H 02 M |

Der vorliegende Recherchenbericht wurde für alle Patentansprüche erstellt

| Recherchenort | Abschlußdatum der Recherche | Prüfer |
|---|---|---|
| Den Haag | 16 Januar 91 | SPEISER P. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

------------------------------------------------

& : Mitglied der gleichen Patentfamilie, übereinstimmendes Dokument